# EUROPEAN PATENT SPECIFICATION

(11) **EP 4 327 064 B1**
(45) Date of publication and mention of the grant of the patent: **31.12.2025**
(21) Application number: 22724100.7
(22) Date of filing: 22.04.2022
(51) Int. Cl.: G01M 5/00, G01M 11/08, G01B 11/16, G01L 1/24

(54) **HYBRID STRUCTURAL DEVICE WITH SENSORS**
HYBRIDE STRUKTURVORRICHTUNG MIT SENSOREN
DISPOSITIF HYBRIDE DE STRUCTURE À CAPTEURS

(30) Priority: 23.04.2021 US 202163179096 P
(43) Date of publication of application: 28.02.2024
(73) Proprietor: Politecnico di Milano, 20133 Milano (IT)
(72) Inventor: BETTINI, Paolo, 20831 Seregno (MB) (IT); AIROLDI, Alessandro Antonio, 20146 Milano (IT); DI MAURO, Sebastiano, 20123 Milano (IT); GHIASVAND, Sara, 20158 Milano (IT)
(74) Representative: Cevini, Gaia
(86) International application number: PCT/EP2022/060662
(87) International publication number: WO 2022/223765

(56) References cited:
- EP-A2- 1 258 760
- WO-A2-2005/062095
- US-B1- 7 687 764
- LU Z J ET AL: "APPLICATION ISSUES OF FIBER OPTIC SENSORS IN AIRCRAFT STRUCTURES", PROCEEDINGS OF SPIE, IEEE, US, vol. 1588, 1 September 1991 (1991-09-01), pages 276 - 281, XP008030419, ISBN: 978-1-62841-730-2, DOI: 10.1117/12.50186

## Description

### Technical field

The present invention relates to a hybrid structural device, in particular made of a composite material with a metallic component equipped with sensors (in particular, for example, deformation and/or temperature sensors), and a manufacturing method thereof. In particular, for example, the present invention relates to a composite/metallic device, such as a rod, for civil engineering or mechanical engineering applications.

### Background art

As is known, composite materials are materials with a polymeric matrix, for example of epoxy resin, reinforced with fibers. In particular, carbon fibers may be used as reinforcement fibers as they guarantee considerable lightness and rigidity to the material and make it suitable for various applications in structures.

However, use of this material in the presence of strong concentrated loads and three-dimensional stress states, which are typical in connection areas of a structure, is critical. It is known to add to structural devices made of composite material components metallic components (in particular, terminal inserts) having the function of connecting elements and load application elements. Hybrid structural devices, i.e., made of composite and metallic material, exist which comprise a body made of a composite material and a metallic terminal insert with the function of connecting element and load application element. For example, it is known to use rods capable of supporting tensile and compressive loads, which represent typical structural elements of truss structures in civil construction and in vehicle structures in the aerospace and automotive fields. These rods are made of a composite material and are equipped with metallic terminal inserts for connection with other rods. The metallic terminal insert indeed transfers the applied load to the rod. Other structural elements of the hybrid type are, for example, sandwich panels made of a composite material and equipped with connection bushings.

Moreover, it is known to embed optical fibers within devices made of a composite material, where, for instance, the optical fibers are used for data communication.

EP 1 260 994 A1 discloses an optical fibre which is helically wound around a central insulator rod beneath the separately formed elastomer insulator disks and passes through metallic terminations at each end. The terminations have sockets to receive the insulator rods and the sockets have a longitudinal groove and tubular conduit to allow the optical fibre passage to external connections. A spade terminal is provided for fixing.

US 6,734,805 B2 discloses a section of pipe for well operations which has a cylindrical fiber composite pipe body and a pair of metallic end fittings. The end fittings differ from each other in that they are provided with mating key features to ensure proper angular or rotational alignment between two abutting sections of pipe. Each pipe is also provided with an optical fiber for data transmission. A fiber optic coupling is located at each end of the optical fiber for sending and receiving data transmissions via optical signals. Multiple strings of pipe are abutted end to end to complete both mechanical and data interfaces. At the junction of each pair of adjacent pipes, the end fittings axially and rotationally align. The flanges of the end fittings are fastened together with bolts such that data transmission takes place between the optical fibers.

US 10,705,298 B1 discloses a core-stiffed composite structure including a plurality of bonded layers forming the core-stiffened composite structure, a fiber optic conductor embedded between two of the plurality of bonded layers, the fiber optic conductor including a terminal end, and a protective box embedded in the core-stiffened composite structure and bonded to one or more of the plurality of bonded layers, wherein the terminal end of the fiber optic conductor projects into the protective box.

EP1258760 A2 discloses an optical fiber sensor with a metal sheath inserted into a composite material.

LU Z J ET AL "Application issues of fiber optic sensors in aircraft structures", Proceedings of Spie, vol. 1588, pages276-281 (XP008030419) discloses another optical fiber sensor with a metal cavity inserted in a ceramic ferrule to be embedded in a composite material.

### Summary of the invention

Structural devices made of a composite material can be equipped with sensors (i.e., they can be sensorized) to monitor the conditions of use and integrity. In particular, fiber optic sensors, for example FBG (Fiber Bragg Grating) sensors, can be attached to and/or inserted inside a structural device during the manufacturing process, to create deformation and/or temperature monitoring systems.

The inventors noticed that the presence of a suitably designed metallic component (in particular, for instance, a metallic terminal insert for a rod) to be integrated in a hybrid structural device of the type described above can be exploited to provide the device with a structural monitoring system such as a load monitoring system, or a usage monitoring system (UMS, Usage Monitoring System), preserving the structural functions of the metallic component. The inventors noticed that a monitoring system may be designed which is configured to measure, in operating conditions, either the stresses possibly applied on some critical elements of a structure, thanks to the fact that the deformations in the body of the structural device directly depend on the loads transmitted by the terminal insert of the device, and the temperature conditions.

The Applicant has therefore tackled the problem of providing a hybrid structural device (i.e., comprising a component made of a composite material and a component made of a metallic material) which is equipped with sensors for effectively measuring deformations (and hence applied loads) and temperature in operating conditions.

According to an aspect of the present invention, it is provided a structural device according to claim 1 and which comprises a first component (e.g., a main body) of a composite material and a second component (e.g., a terminal insert) of a metallic material, the second component being integrated in the first component during a manufacturing process of the structural device. The device further comprises a monitoring system comprising an optical fiber with a number of sensors for sensing data indicative of an operating status of the device. In particular, the second component is configured to house an end portion of the monitoring system. The end portion of the monitoring system which is housed in the second component of the hybrid structural device may be configured to be connected, by means of, e.g., a connector, to an acquisition system configured to acquire monitoring signals coming from the number of sensors.

The monitoring system of the structural device according to the present invention allows to provide deformation measurements, by means of fiber optic sensors mechanically fixed to the first component of the structural device (namely, the component of composite material), and temperature measurements inside the second component of the structural device (namely, the metallic component), by means of fiber optic sensors which are not mechanically fixed to the structure (in other words, they are loosely installed in the second component), in order to make the temperature measurements unaffected by mechanical deformations. In this way, the temperature measurements allow to compensate for the effect of the temperature on the deformation measurements within the structural device. According to the present invention, the second component is configured to house an end portion of the monitoring system comprised in the structural device, i.e., an end portion of the optical fiber including the fiber optic sensor which is loosely installed therein. Therefore, the second component represents a terminal of the monitoring system, which facilitates the introduction of the monitoring system in the structural device. Moreover, the optical fiber is protected during the manufacturing process. This is achieved without the structural functions of the second component being altered, i.e., maintaining the ability of the second component to effectively transfer loads to the first component.

According to the present invention, the second component is realized by applying an additive manufacturing (AM) technique, which allows providing the second component with channels and cavities designed to house the end portion of the monitoring system, which simplify the installation of the monitoring system in the structural device and allow protecting the optical fiber.

Preferably, the structural device further comprises a third component for protecting the optical fiber of the end portion of the monitoring system during the manufacturing.

According to embodiments of the present invention, the third component is a separate component with respect to the first component and the second component, wherein the end portion of the monitoring system comprises an end portion of the optical fiber and the third component is configured to have the end portion of the optical fiber wrapped on it, and wherein the second component comprises an inner cavity configured to house the third component with the end portion of the optical fiber wrapped on it.

Preferably, according to these embodiments of the present invention, the third component is made of a thermoplastic resin.

According to other embodiments of the present invention, the third component is made in a single body with the second component, wherein the end portion of the monitoring system comprises an end portion of the optical fiber and the second component is configured to have the end portion of the optical fiber wrapped on an external surface thereof, wherein the third component comprises a cover projecting from the external surface to cover the end portion of the optical fiber wrapped on it, and wherein the structural device comprises a closing element configured to be associated with the third component to close it in a removable way, to hold the end portion of the optical fiber within a closed protection cavity formed between the external surface and the cover.

Preferably, the second component comprises, in its side wall, a passage channel for the optical fiber of the monitoring system.

Preferably, the optical fiber comprises a deformation sensor inscribed therein and a temperature sensor inscribed therein, wherein the temperature sensor is loosely installed in the passage channel.

Preferably, the deformation sensor and the temperature sensor are fiber bragg grating sensors.

According to the claimed invention, the structural device is a rod, the first component is a cylindrical main body of the rod and the second component is a terminal insert configured to be associated with an end of the main body.

Preferably, the second component is made in one of the following metallic materials: aluminum alloy, titanium alloy, steel, nickel-titanium alloy.

According to another aspect, the present invention provides a manufacturing method according to claim 10 of a structural device comprising a first component of a composite material, a second component of a metallic material and a monitoring system comprising an optical fiber with a number of sensors, the manufacturing method comprising:
a) providing the second component of a metallic material by applying an additive manufacturing technique;
b) performing a first lamination process to provide a first element of the first component;
c) associating the second component with the first element of the first component at the end of the first lamination process;
d) performing a second lamination process to provide a second element of the first component; and
e) during the second lamination process, putting the optical fiber over a layer of a lamination sequence of the second lamination process, making an end portion of the optical fiber to pass in a passage channel of the second component and applying a further layer of the lamination sequence over the optical fiber.

Preferably, step a) comprises manufacturing the second component by using a laser metal deposition technology.

Profitably, step a) comprises providing one or more protection tubes for protecting the end portion of the optical fiber inside and outside the passage channel and gluing an external surface of the one or more protection tubes to the second component at a channel ingress end and at a channel egress end to seal the space between the one or more protection tubes and the walls of the passage channel.

Preferably, step b) comprises obtaining the first element as a pre-polymerized element by applying a lamination sequence comprising layers of carbon unidirectional and a cure cycle in autoclave.

Preferably, step d) comprises applying on the pre-polymerized element, before the layer of the lamination sequence of the second lamination process, a layer of adhesive extending partly over an external surface of the second component.

### Brief description of the drawings

Further characteristics and advantages will become more apparent by reading the following detailed description of embodiment given as examples with reference to the accompanying drawings, wherein:
- Figure 1a schematically shows a sensorized rod in hybrid composite/metallic material according to a first embodiment of the present invention;
- Figure 1b is an exploded view of the rod of Figure 1a;
- Figure 2 schematically shows a terminal insert and an element of protection of the optical fiber of the sensorized rod of Figure 1a;
- Figure 3a schematically shows a terminal insert of the rod according to a first embodiment of the invention;
- Figure 3b shows more details of the terminal insert of Figure 3a;
- Figures 3c and 3d show, respectively, a top view and a sectional view according to plane A-A of the terminal insert of Figure 3a;
- Figure 4a schematically shows a terminal insert and a closing element of a sensorized rod according to a second embodiment of the present invention;
- Figure 4b shows an exploded view of the elements of Figure 4a;
- Figure 4c is a partial section view of the elements of Figure 4a:
- Figure 5 is a flow chart of a manufacturing process of a sensorized rod according to the present invention;
- Figure 6 is a sectional view of a portion of a sensorized rod according to the first embodiment comprising an exemplary monitoring system; and
- Figure 7 shows four graphs of the signals obtained from one of the sensors of the exemplary monitoring system of Figure 6, acquired during tests performed by using a sensorized rod according to an embodiment of the present invention.

### Detailed description of preferred embodiments of the invention

In the present description and claims, unless otherwise specified, all the numbers and values should be intended as preceded by the term "about". Also, all ranges include any combination of the maximum and minimum points disclosed and include any intermediate ranges therein, which may or may not be specifically enumerated herein.

In the present description, reference will be made, for sake of illustration, to a hybrid structural device according to embodiments of the present invention. The hybrid structural device comprises a first component of a composite material and a second component of a metallic material. The first component of the composite material is made by combining two elements, a first element and a second element, which are realized by carrying out two different lamination processes. In the embodiments considered hereafter, the structural device is a rod. The first component is a cylindrical main body of the structural device made by combining an inner tube and an outer tube. According to the present invention, the second component is integrated in the first component during a manufacturing process of the device, which will be described below. In particular, according to the embodiments considered hereinafter, the second component is a terminal insert of the rod. The structural device further comprises a monitoring system comprising an optical fiber with a number of sensors for sensing data indicative of an operating status of the device. The second component is configured to house an end portion of the monitoring system, as it will be described in greater detail herein after.

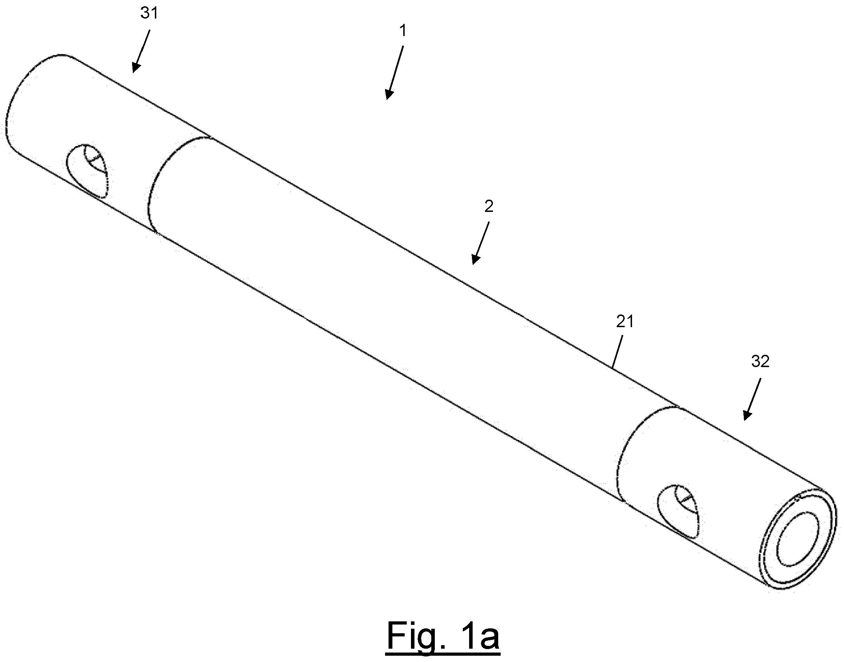

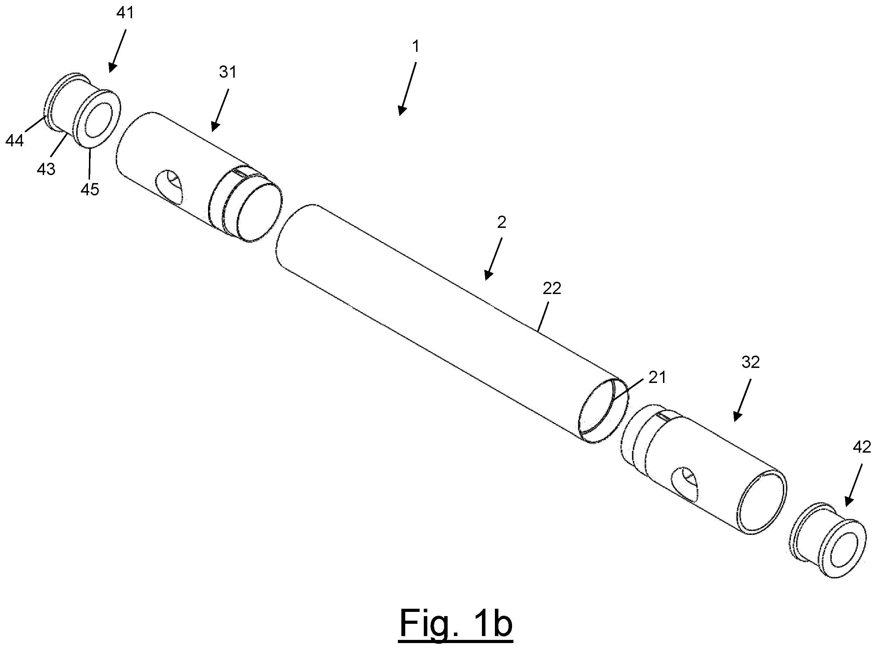

Figure 1a schematically shows a structural device 1 according to a first embodiment of the present invention. The structural device is a sensorized rod. Figure 1b is an exploded view of the structural device of Figure 1a showing the elements of the structural device. This kind of device may be used in civil engineering structures, such as trusses, or in aeronautical applications as an actuation rod in a vehicle, such as a helicopter, or in a landing gear.

In particular, the structural device 1 comprises:
- a cylindrical main body 2 comprising an inner tube 21 and an outer tube 22;
- a first terminal insert 31 and a second terminal insert 32 having a cylindrical shape, configured to be connected to, respectively, a first end and a second end of the main body 2;
- a monitoring system comprising a number of sensors (not shown in Figure 1a), in particular comprising an optical fiber having a number of sensors inscribed therein; and
- a first fiber protection element 41 and a second fiber protection element 42 configured to protect the optical fiber and configured to be housed, respectively, in the first terminal insert 31 and in the second terminal insert 32.

The main body 2 is preferably made of composite material. In particular, the inner tube 21 is preferably a pre-polymerized hollow tube made of composite material, which has an internal diameter for example equal to about 36 mm and an external diameter for example equal to about 38 mm. These diameters could vary in a range between 10 mm and 150 mm. The dimensions depend on the application for which the structural device is designed. The outer tube 22 is made by laminating a number of layers of composite material over the inner tube 21 and over part of the first and second terminal inserts 31, 32, as it will be described below.

The composite material is preferably a thermosetting polymer matrix composite material (epoxy, phenolic, vinyl) with polymerization processes at temperatures below 200°C reinforced with carbon, glass, aramid or polyethylene fibers, which may be long or short fibers, and which can be arranged to be either of the unidirectional type or fabric type.

Both the first terminal insert 31 and the second terminal insert 32 are made of a metallic material, such as one of: aluminum alloy, titanium alloy, steel, nickel-titanium alloy. These inserts can be made by means of an additive manufacturing (AM) process, for example, by means of one of LMD (Laser Metal Deposition), SLM (Selective Laser Melting) or EBM (Electron Beam Melting) technologies.

Each one of the first and second fiber protection elements 41, 42 is preferably made of a polymeric material suitable for resisting the polymerization processes of the composite material of the main body 2. Such material can be, for example, a thermoplastic resin, for example a ULTEM^{™} resin. Each one of the first and second fiber protection elements 41, 42 can be made by means of an additive manufacturing (AM) process, for example by means of the FDM (Fused Deposition Modeling) technology.

The monitoring system comprises at least one optical fiber and a number N of sensors inscribed therein, N being an integer number greater than one. In particular, the number of sensors may include:
- first sensors, in particular deformation sensors, to be positioned in the area where the first terminal insert 31 is connected with the main body 2 and in the area where the second terminal inserts 32 is connected with the cylindrical body 2, to monitor possible damages in the areas where the connection between the metallic terminal insert and the composite main body takes place; and
- second sensors, in particular deformation sensors, to be positioned in the main body 2, to measure the loads to which the structural device is subject, in particular the axial loads carried by the structural device.

Both the first sensors and the second sensors are fixed (which means mechanically attached) to a portion of the structural device. In particular, the first sensors can be embedded in the composite layers of the main body 2 at the junctions with the first and second terminal inserts 31, 32, while the second sensors can be embedded between the layers of the composite material of the main body 2, at a given distance from the terminal inserts 31, 32.

According to preferred embodiments, the monitoring system further comprises third sensors which are loosely inserted in the structural device, i.e., applied without being mechanically attached to any portion of the structural device, capable of measuring the room temperature. These sensors are useful for making the data provided by the first sensors and second sensors less sensitive to temperature. Indeed, temperature sensitivity, as known, affects the data provided by typical deformation sensors inscribed in an optical fiber. As it will be described herein after, the third sensors can be advantageously placed in the portion of the optical fiber which is inserted in channels or cavities obtained inside the first and second terminal inserts 31, 32 so that the polymerization process which is part of the manufacturing process of the structural device does not cause them to be mechanically attached to the structural device.

The sensors (i.e., the first, second and third sensors) of the monitoring system mentioned above are preferably FBG (Fiber Bragg Grating) sensors inscribed in the at least one optical fiber of the monitoring system. The length of the sensors can be, for example, 2 mm and it can vary from 1 mm to 100 mm. The sensors may be obtained through the DTG (Draw Tower Grating) manufacturing process and may have a coating made of ORMOCER^{®}. The Bragg wavelengths may be between 1540.0 nm and 1541.8 nm. Such types of sensors are known and will not be further described below.

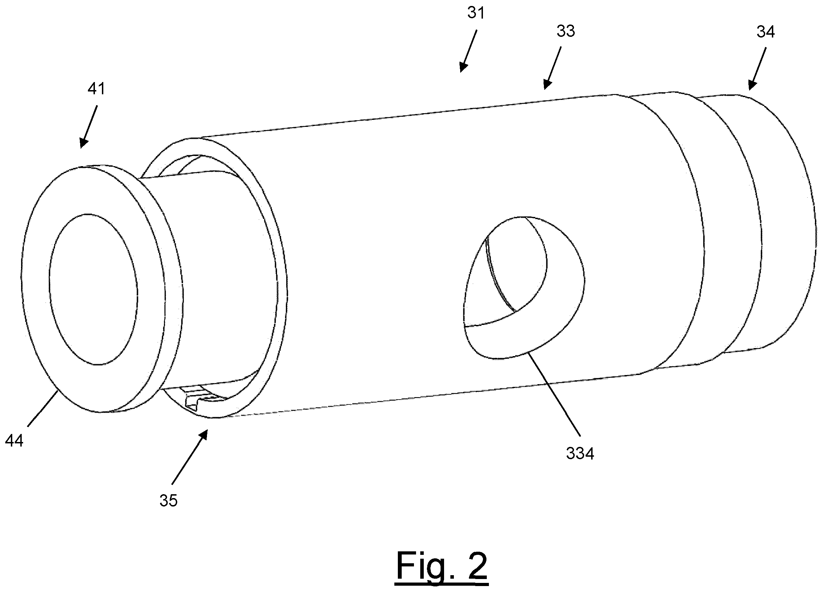

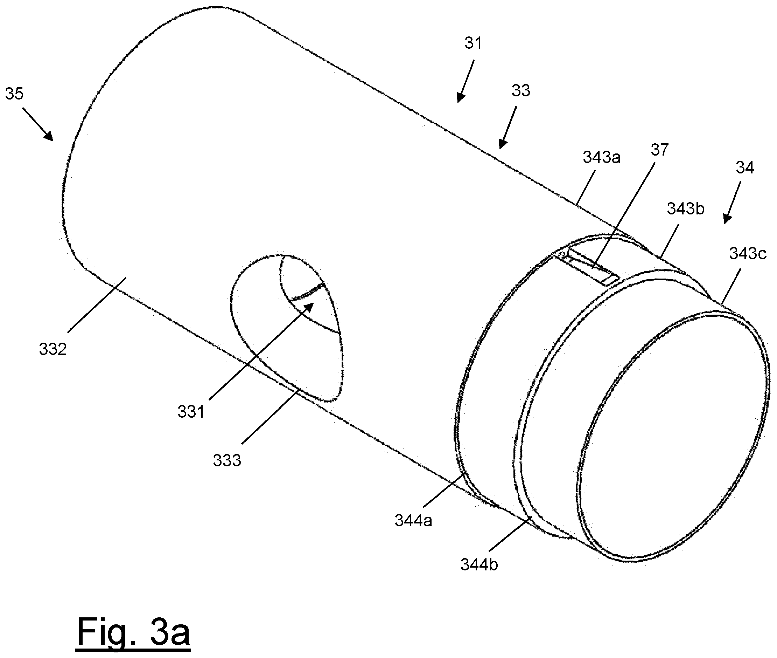

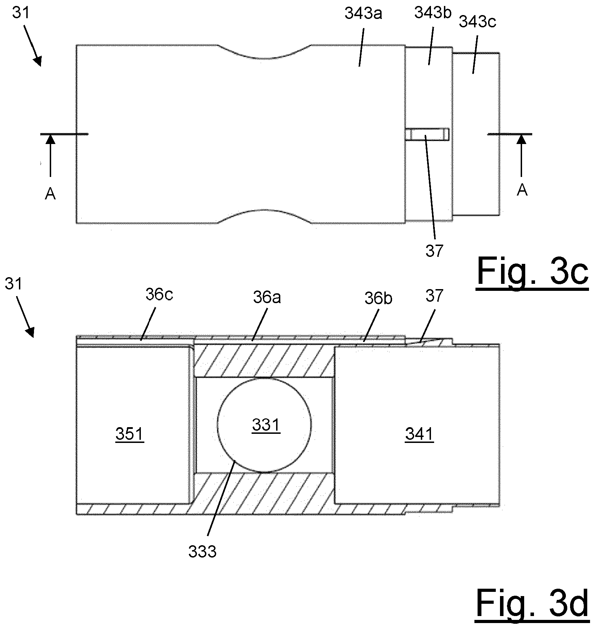

Figure 2 schematically shows the first terminal insert 31 and the first fiber protection element 41 housed therein, according to the considered embodiment of the present invention. Figures 3a-3b schematically show the first terminal insert 31. The second terminal insert 32 and the second fiber protection element 42 have a substantially similar structure.

The first terminal insert 31 has a substantially cylindrical shape. It has a central portion 33, a first end portion 34 and a second end portion 35. The total length of the first terminal insert 31 can be, for example, approximately 90 mm. This length can vary, for example, from 25 mm to 300 mm. The size of the first terminal insert (and all dimensions specified herein below) depends on the size of structural device for which it is designed.

The central portion 33 has an inner cavity 331 and a side wall 332. In the exemplary embodiment shown in the Figures, the central portion 33 comprises a pair of holes 333, 334 in diametrically opposite positions in the side wall 332 of the central portion 33. These holes 333, 334 may be configured to allow the passage of a connection or load element such as a pin that allows the application of loads to the first component of the structural device (the main body 2 in this exemplary case), in accordance with the structural function of the device itself. Each hole 333, 334 has, for example, a diameter ranging between 4 mm to 80 mm; it may be equal to about 20 mm.

The cavity 331 of the central portion 33 has a diameter between, for instance, 4 mm and 80 mm; it can be, for example, 20 mm. The central portion 33 may have a diameter between, for example, 10 mm and 150 mm; it may be equal to 38 mm. The expression "diameter of the central portion" means the sum of the diameter of the inner cavity 331 and the thickness of the side wall 332 of the central portion 33.

Furthermore, the side wall 332 comprises a first portion 36a of an optical fiber passage channel 36 (hereinafter referred to simply as "passage channel") formed in the thickness of said side wall 332 in the proximity of an external surface of the side wall 332.The first portion of the passage channel 36a runs longitudinally in the thickness of said central portion 33 and allows an optical fiber to be housed inside it, as it will be described in detail below. The passage channel 36 may have a circular cross section. The diameter of said first portion of the passage channel 36a is, for example, about 1 mm. In the embodiment shown in the Figures, the orientation of the passage channel is about 90° with respect to an axis comprising the two centers of the holes 333, 334.

The first end portion 34 of the first terminal insert 31 is configured to be associated with a first end of the main body 2. In particular, the first end portion 34 comprises, for its entire length, an inner cavity 341 of diameter greater than the inner cavity 331 of the central portion 33 (as shown, in particular, in Figure 3d) and connected to it. The inner cavity 341 of the first end portion 34 has, for example, a diameter variable in the range from 8 mm to 130 mm; this diameter can be, for example, equal to 32 mm. At the position in which the two cavities 331, 341 are connected, a first internal annular step 342a is formed, whose width (namely, the width of the flat annular surface of the step) is determined by the difference in thickness of the side wall 332 of the central portion 33 and the first end portion 34.

The first end portion 34 is preferably tapered, i.e., its diameter decreases, at discrete steps, from the area where the first end portion 34 is connected to the central portion 33 towards the outside. In particular, the first end portion 34 preferably comprises a first section 343a having a first diameter d1 (corresponding to the diameter of the central portion 33), a second section 343b having a second diameter d2 and a third section 343c having a third diameter d3. At each of said second and third sections 343b, 343c, the first end portion 34 has a respective reduction in diameter with respect to the diameter d1 of the first section 343a. The expression " diameter of the section" indicates the external diameter of the end portion 34 in said section, i.e., the sum of the diameter of the inner cavity and the thickness of the side wall of the end portion at said section. In particular, the second section 343b preferably has a diameter reduction of about 4% with respect to the first section 343a, and has, for example, a diameter d2 of 36.5 mm. The third section 343c has a diameter reduction of about 10% with respect to the first section 343a, and has, for example, a diameter d3 of 34.5 mm. It should be noted that the diameter of the third section 343c is such as to allow the pre-polymerized tube 21 to be fitted onto the end portion 34, as will be described in detail below. Therefore, the diameter of the third section 343c corresponds to an inner diameter of the inner tube 21 while the diameter of the second section 343b corresponds to an outer diameter of the inner tube 21.

The external surface of the first end portion 34 therefore has, at the first reduction in diameter of the end portion, a first external annular step 344a, and, at the second reduction in diameter of the end portion, a second external annular step 344b. The width of the first external annular step 344a is equal to about the difference between the diameter d1 of the first section 343a and the diameter d2 of the second section 343b, while the width of the second external step 344b is equal to about the difference between the diameter d2 of the second portion 343b and the diameter d3 of the third portion 343c.

The first section 343a also comprises, in the thickness of the side wall, a second portion 36b of the passage channel which, on one side, is connected to the first portion 36a of the passage channel in correspondence with the first internal annular step 342a and, on the other side, ends in the flat annular surface of the first external annular step 344a. The orientation of the second portion 36b of the passage channel, in the exemplary embodiment shown in the Figures, is approximately 90° with respect to the axis comprising the centers of the holes 333, 334 of the central portion 33.

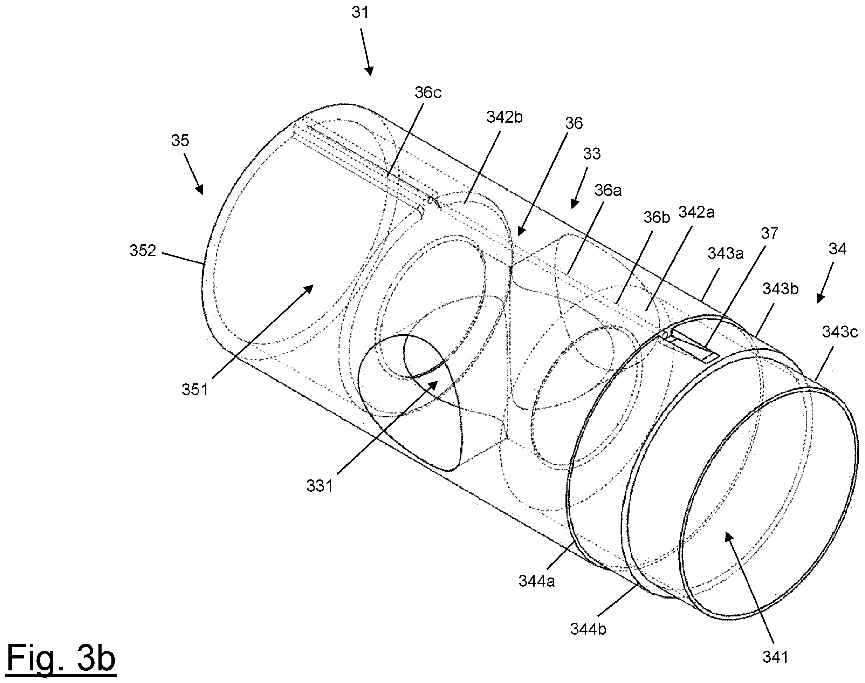

Furthermore, the second section 343b comprises, on its external surface in a position corresponding to the position of the second portion 36b of the passage channel (hence, with an orientation of approximately 90° with respect to the axis of the holes 333, 334), a groove 37 in the form of a ramp or chute with a substantially rectangular cross section, which is obtained in the thickness of the side wall. The groove 37 has a bottom on the external surface of the second section 343b which is inclined towards the first external annular step 344a, starting from a position close to the second external annular step 344b. In particular, the groove 37 joins the second portion 36b of the passage channel at the first external annular step 344a. The groove 37 can have, for example, a width of 2 mm and a depth ranging from about 0 mm (on the external surface close to the second external annular step 344b) to 1.5 mm (at the first external step 344a), as shown schematically in Figure 3b. The groove 37 acts as a guide for passing the optical fiber of the monitoring system in the second portion 36b of the passage channel obtained in the thickness of the side wall, as it will be described in detail below. The end of the passage channel which is obtained in the first external annular step 344a (as shown in Figures 3a and 3b) will also be referred to as the "channel ingress end" for the optical fiber.

The second end portion 35 of the first terminal insert 31 is configured to house the first fiber protection element 41. In fact, it comprises an inner cavity 351 preferably having a diameter substantially equal to the diameter of the inner cavity 341 of the first end portion 34 (see, in particular, Figure 3d). The inner cavity 351 is connected to the cavity of the central portion 33. At the position in which the two cavities are connected, a second internal annular step 342b is formed, whose width is determined by the difference in thickness of the side wall at the central portion 33 and at the second end portion 35. The end of the second portion 36b of the passage channel at the first internal step 342a will also be referred to as the "channel egress end" for the optical fiber as the optical fiber actually exits the passage channel obtained in the side wall of the first terminal insert 31 at this position.

The second end portion 35 further comprises internally, in the thickness of its side wall, a substantially rectangular groove 36c which is open towards the cavity 351. This groove 36c can have, for example, a width of 2 mm and a depth of 1.5 mm. The groove 36c is connected, on one side, to the first portion 36a of the passage channel at the second internal step 342b and, on the other side, ends at an outer edge 352 of the second end portion 35. The groove 36c is therefore configured as a further open portion of the passage channel for the optical fiber.

The first fiber protection element 41 is preferably in the form of a spool (see Figure 1b and Figure 2) acting as a closing cap for the inner cavity 351 of the second end portion 35 of the first terminal insert 31. In particular, the fiber protection element 41 comprises a hollow cylindrical body 43 and, at each end of said hollow cylindrical body, a respective flange 44, 45. The hollow cylindrical body 43 can have an inner diameter between, for example, 4 mm and 80 mm (it may be equal to, for example, about 20 mm) and an outer diameter between, for example, 5 mm and 120 mm (it may be equal to, for example, about 28 mm). The outer diameter of each flange 44, 45 can be, for example, slightly lower than the diameter of the inner cavity 351 of the second end portion 35 of the terminal insert 31; it may range, for example, from 7 mm to 129 mm and be equal to, for example, about 31 mm. The overall length of the first fiber protection element 41 may range, for example, from 7 mm to 100 mm and be equal to, for example, about 25 mm, while the thickness of each flange 44, 45 may range, for example, from 1 mm to 10 mm and be equal to, for example, about 3 mm.

As mentioned above, the optical fiber (not shown in Figures 3a-3d), with the sensors inscribed therein, passes inside the passage channel 36 obtained in the side wall of the first terminal insert 31 and exits from the first terminal insert 31 at the position of the groove 36c comprised in the second end portion 35. Then, the first fiber protection element 41 allows the optical fiber that exits the first terminal insert 31 to be wrapped on it to protect the optical fiber during the polymerization process comprised in the manufacturing process of the structural device. In fact, this process takes place at pressures of the order of 5-6 bar with temperatures between 120°C and 180°C and could easily damage the optical fiber.

The optical fiber which emerges from the first terminal insert 31 preferably has an adequate length to allow it to be provided with a connector for connecting the monitoring system to an acquisition system configured to acquire the signals provided by the fiber optic sensors. The connector may be placed in the cavity once the first fiber protection element 41 is removed after the end of the polymerization process.

It is to be noticed that the first terminal insert 31, which is manufactured separately from the main body 2, may be provided with the optical fiber already inserted therein, ready to be connected to the pre-polymerized tube, as it will be described herein after.

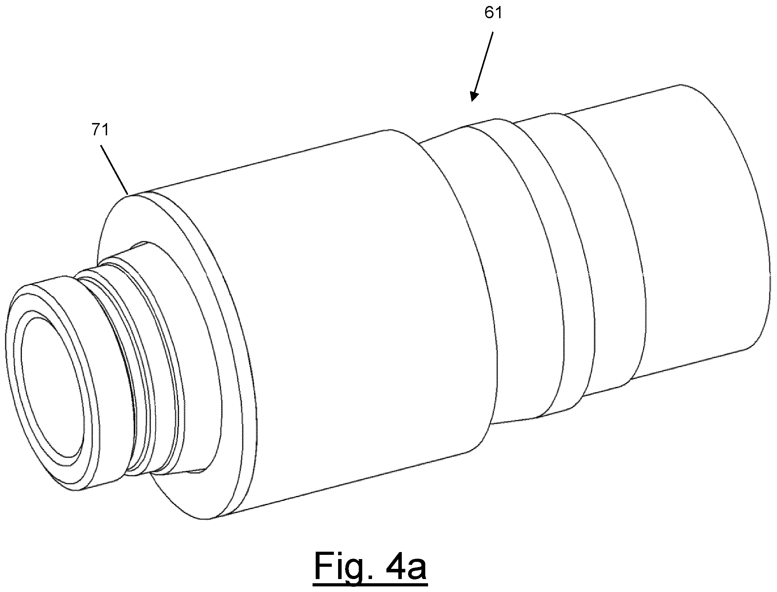

Figures 4a-4c schematically show an exemplary terminal insert according to a second embodiment of the structural device of the present invention. According to the second embodiment, the structural device is a sensorized rod which preferably comprises:
- a cylindrical main body comprising an inner tube and an outer tube similar to the main body already described above;
- a monitoring system comprising an optical fiber having a number of sensors inscribed therein similar to the monitoring system already described above; and
- a first terminal insert and a second terminal insert, configured to be inserted, respectively, at a first end and a second end of the main body and comprising, respectively, a first protection element of the optical fiber and a second protection element of the optical fiber, each one made in a single body with the other elements of the respective terminal insert.

Furthermore, the structural device according to this embodiment comprises a first closing element and a second closing element (one of them is schematically shown in Figures 4a-4c) configured to be associated with, respectively, the first terminal insert and the second terminal insert, in a removable manner, to close the first protection element of the optical fiber and the second protection element of the optical fiber and protect the optical fiber during the polymerization process already mentioned above.

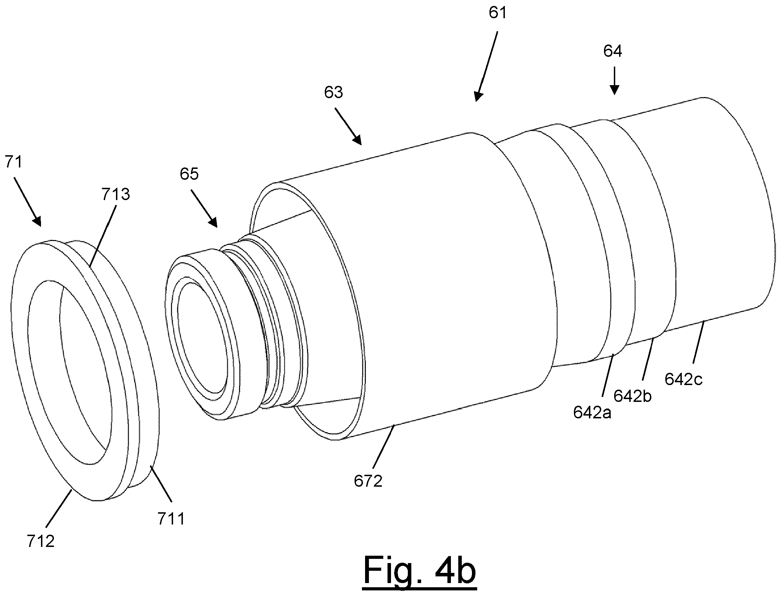

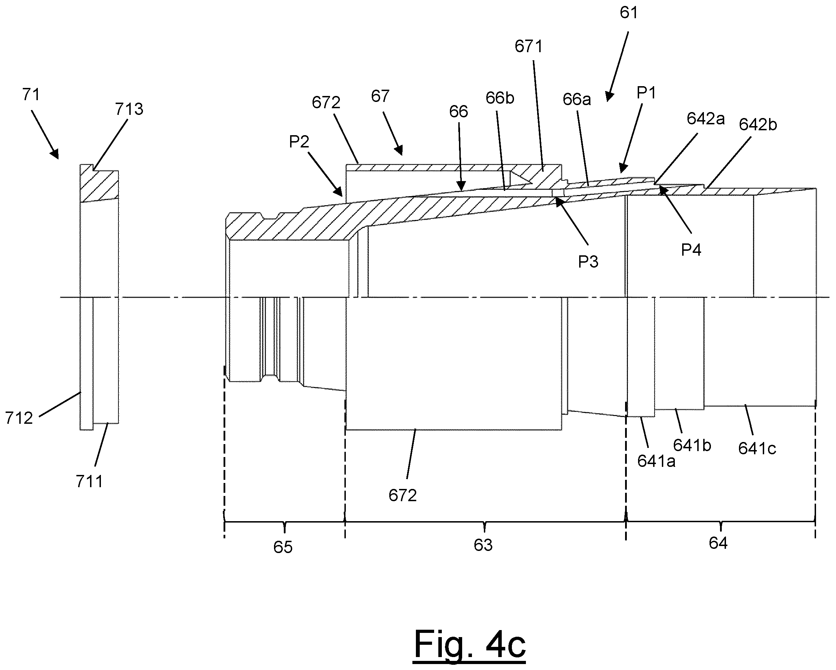

According to this embodiment, each terminal insert has a substantially conical shape. Figure 4a shows a terminal insert 61 according to this embodiment and a closing element 71 associated with such terminal insert. Figure 4b shows the terminal insert 61 and the closing element 71 in an exploded configuration. Figure 4c is a partial sectional view of the terminal insert 61 and the closing element 71 of Figure 4b.

The terminal insert 61 preferably comprises a central portion 63, a first end portion 64 and a second end portion 65. The total length of the terminal insert can be, for example, within a range from 25 mm to 300 mm, for example equal to about 90 mm.

The central portion 63 of the terminal insert 61 is preferably hollow and has a substantially conical shape. The inner diameter of this central portion 63 is maximum at a first position P1 in which this portion 63 joins the first end portion 64; at position P1, the maximum value of the inner diameter is, for example, between 8 mm and 130 mm and equal to, for example, 32 mm. The inner diameter may have a minimum at a second position P2 in which the central portion joins the second end portion 65; at position P2, the minimum value of the inner diameter is, for example, between 6 mm and 90 mm and equal to 20 mm. The thickness of the side wall of the central portion 63 is also variable, as shown schematically in Figure 4c. The thickness of the side wall may vary within a range, for example, from 2 mm to 10 mm and be equal to, for example, 2 mm at position P1 and 4 mm at position P2.

The side wall of the central portion 63 comprises a passage channel 66 to allow the passage of the optical fiber of the monitoring system. The passage channel 66 may have a circular cross section with a diameter of, for example, about 1.2 mm. The passage channel 66 is preferably formed in the thickness of the side wall and has a first, inclined, portion 66a and a second, substantially horizontal, portion 66b, as shown in Figure 4c. The first portion 66a has an inclination of, for example, about 5° with respect to a longitudinal axis of the terminal insert 61. The first portion 66a is connected to the second portion 66b at position P3 shown in Figure 4c. Once the structural device of this embodiment has been assembled, the position where the optical fiber exits from the terminal insert 61 corresponds to the end of the second portion 66b of the passage channel 66 in the side wall of the central portion 63 of the terminal insert 61, this end being opposite to position P3 where the second position 66b joins the first portion 66a. This end of the passage channel 66 will also be referred to as the "channel egress end" for the optical fiber.

The central portion 63 further comprises a fiber protection element 67 in a single body with the side wall of the central portion 63. The fiber protection element 67 is preferably an element projecting from the side wall of the central portion 63. In particular, this element comprises a circumferential ring 671 projecting outwards from the side wall and a cover 672 attached to said ring, in the form of a hollow cylinder, which substantially surrounds the central portion 63. The position of the ring 671 substantially corresponds to the position where the first portion 66a of the passage channel 66 joins the second portion 66b, namely position P3 shown in Figure 4c. The cover 672 extends from the ring 671 in order to protect the optical fiber that protrudes from the channel egress end and therefore has a greater length than the length of the second portion 66b of the passage channel 66. The cover 672 has, for example, a thickness between 2 mm and 6 mm (equal to, for example, about 2 mm) and a length between, for example, 10 mm and 120 mm and equal to about 25 mm.

The first end portion 64 of the terminal insert 61 is configured to be associated with a first end of the main body 2.

The first end portion 64 is hollow and comprises a first section 641a having a first diameter d1, a second section 641b having a second diameter d2 and a third section 641c having a third diameter d3. At each of said second and third sections 641b, 641c, the end portion has a respective reduction in diameter with respect to the diameter d1 of the first section 641a. In particular, the second section 641b preferably has a diameter reduction of about 4% with respect to the first section 641a, and for example has a second diameter d2 of 36.5 mm. The third section 641c has a diameter reduction of about 10% with respect to the first section 641a, and for example has a third diameter d3 of 34.5 mm. It should be noted that the diameter d3 of the third section 641c is such as to allow the inner tube 21 of the main body 2, which is, as mentioned, a pre-polymerized tube, to be fitted onto the first end portion 64, as it will be described in detail below. The overall length of the sections including the reductions in diameter, i.e., the second and third sections 641b, 641c, may vary, for example, from 10 mm to 120 mm and may be, for example, approximately 25 mm.

The external surface of the first end portion 64 has, at the first reduction in diameter of the first end portion, a first external annular step 642a, and, at the second reduction in diameter of the first end portion, a second external annular step 642b.

Furthermore, at the first section 641a and the second section 641b, the side wall of the first end portion 64 may comprise respective portions of the passage channel 66, both inclined, which are connected to each other and to the first portion 66a of the passage channel 66 comprised in the central portion 63 of the terminal insert 61. In particular, in the exemplary embodiment shown in Figure 4c, the second section 641b comprises an end of the passage channel 66 which will also be referred to as the "channel ingress end" for the optical fiber. The position of the channel ingress end is indicated as position P4 in Figure 4c.

Finally, as shown schematically in Figure 4c, the thickness of the side wall of the first end portion 64 can be variable. For example, in the first section 641a the thickness may vary between 2 mm and 10 mm, and be equal to about 2 mm, while in the second section 641b the thickness may vary between 0.8 mm and 8 mm and be equal to about 0.8 mm.

The second end portion 65 is also preferably hollow with a substantially conical shape, having a decreasing diameter towards an outer edge thereof. Furthermore, the second end portion 65 can be shaped as shown schematically in the Figures. In particular, the second end portion 65 may be threaded so as to join another element of the structure in which the structural device is inserted.

The closing element 71 is, as anticipated above, configured to be associated with the fiber protection element 67, in a removable way, to close the fiber protection element 67 and protect the optical fiber during the polymerization process. In particular, as shown in the Figures, the closing element 71 is preferably a ring with two portions 711, 712 of different external diameter and a step 713 at the connection position of the two portions. A first portion 711 of this ring, i.e., the portion with a lower external diameter, is preferably configured to fit into the fiber protection element 67 in order to close it as shown in Figure 4a and form a closed protection cavity between the external surface of the center portion 63 and the cover 672. In this closed configuration, the flat annular surface of the step 713 of the ring 71 abuts against the outer edge of the cover 672 of the protective element 67.

The optical fiber (not shown in Figures 4a-4c), with the sensors inscribed therein, passes inside the passage channel 66 obtained in the side wall of the first terminal insert 61 and exits from the first terminal insert 61 at the channel egress end of the second portion 66b of the passage channel 66 in the center portion 63 of the terminal insert. The optical fiber that exits the terminal insert 61 may be wrapped on it, in particular, on the external surface of the center portion 63 so that the fiber protection element 67, when closed by the closing element 71, holds the end portion of the optical fiber within the closed protection cavity which is formed between the external surface of the center portion 33 and the cover 672, to protect the optical fiber during the polymerization process comprised in the manufacturing process of the structural device.

Also in this case, the optical fiber which emerges from the terminal insert 61 has preferably an adequate length to allow it to be provided with a connector for connecting the monitoring system an acquisition system configured to acquire the signals provided by the fiber optic sensors. Once the optical fiber has been connected, the connector can be attached to the external surface of the terminal insert 61.

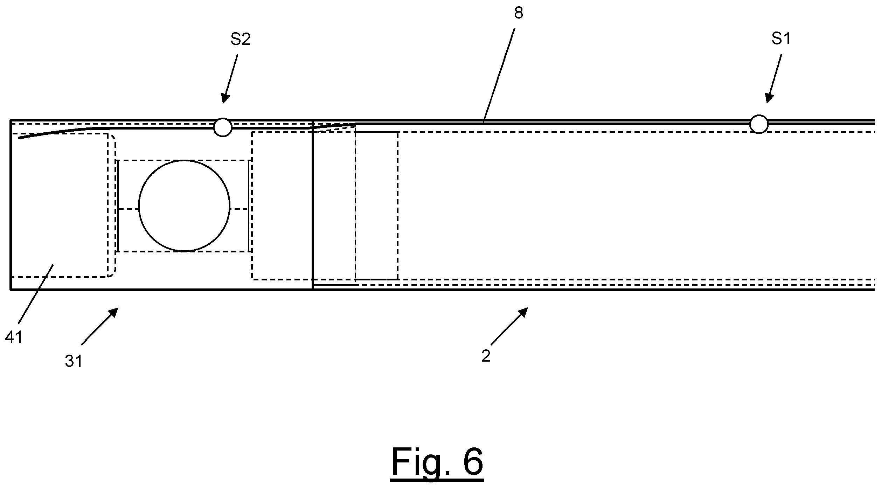

In the following part of the present description, an exemplary manufacturing process of a structural device according to the present invention will be described. By way of example only, reference will be made to a process relating to a sensorized rod comprising titanium alloy terminal inserts made according to the first embodiment described above (such as the sensorized rod schematically shown in Figures 1a and 1b). Furthermore, reference will be made to a monitoring system comprising a single optical fiber and two sensors inscribed in it at a reciprocal distance of about 120 mm, as shown schematically in Figure 6. In particular, reference will be made to an optical fiber, indicated with the reference number 8, comprising a first sensor S1, in particular a deformation sensor, to be positioned in the body 2 and embedded in the composite material, and a second sensor S2, in particular a temperature sensor, to be positioned in the terminal insert 31, in the channel for the passage of the optical fiber so as to be loosely installed in the passage channel (i.e., not mechanically attached to the terminal insert).

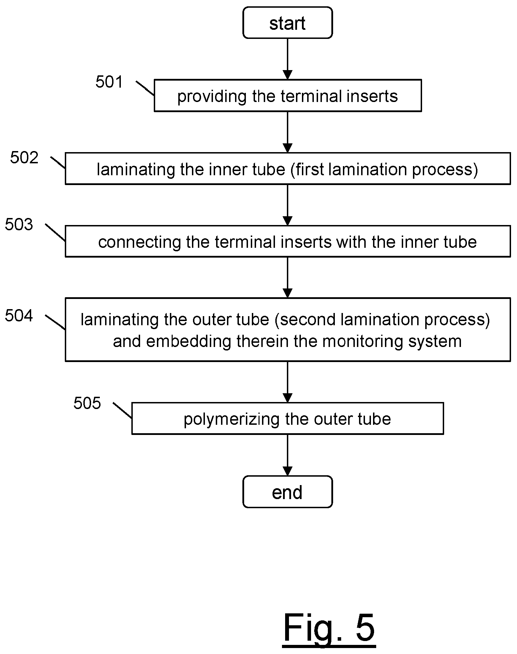

The manufacturing process preferably comprises five main steps which are indicated in the flowchart of Figure 5.

The first of these five main steps, i.e., step 501 in the flowchart of Figure 5, comprises manufacturing the terminal inserts 31, 32 and associating each of these terminal inserts with one or two protection tubes, for example a PTFE (polytetrafluoroethylene) tube, to facilitate the housing of the optical fiber 8 in the passage channel 36.

In particular, step 501 preferably includes the following operations:
- manufacturing the terminal inserts 31, 32, for example in titanium alloy, by means of an additive manufacturing process, for example using the LMD technology;
- cutting two protection tubes of about 0.7 mm in diameter for each terminal insert 31, 32 for a length suitable to protect the optical fiber 8 inside and outside the terminal insert 31, 32 at the channel ingress and egress ends; alternatively, if allowed by the dimensions of the passage channel, a single tube can be used for the whole length of the passage channel;
- preparing the surface of the protection tube by using sandpaper to obtain a rough surface ensuring a mechanical adhesion when gluing the protection tube to the material of the terminal insert 31, 32;
- gluing the external surface of each protection tube to the respective terminal insert 31, 32 at the channel ingress and egress ends of the passage channel 36 obtained in each terminal insert 31, 32, taking care to seal the space between the protection tube and the walls of the channel, especially on the side of the main body 2, so as to prevent the resin, during the polymerization process of the composite material, from penetrating inside the passage channel 36 and gluing the sensor S2, which must remain free from mechanical constraints to measure the temperature; and

Step 502 comprises performing a first lamination process to obtain the inner tube 21 of the main body 2 as a pre-polymerized tube, as already mentioned above. The pre-polymerized tube is a carbon tube, which is obtained by the first lamination process carried out with a lamination (or lay-up) sequence consisting, for example, in three layers of carbon unidirectional (or carbon UD), and a cure cycle in autoclave. Use of the pre-polymerized tube simplifies the lamination process and allows the terminal inserts to be better integrated.

Step 503 comprises connecting the terminal inserts 31, 32 with the inner tube 21 of the main body 2.

Then, step 503 preferably includes:
- applying a glue (for example, a two-component epoxy paste glue) on the external part of the terminal inserts 31, 32, at the third section 343c corresponding to the second reduction in diameter of the first end portion 34 of each terminal insert 31, 32;
- connecting the pre-polymerized tube and the terminal inserts 31, 32, keeping the longitudinal axes of the terminal inserts and the pre-polymerized tube aligned; and
- keeping the pre-polymerized tube and the terminal inserts 31, 32 in place for the time necessary for the glue to harden.

At the end of step 503, an artifact is obtained which will also be referred to as the first half-finished product.

Step 504 comprises carrying out a second lamination process to obtain the outer tube 22 of the main body 2 over the first half-finished product. In particular, step 504 preferably includes:
- cutting the sheets for the realization of the walls of the outer tube 22 of the main body 2, with the desired lay-up sequence (indicated as outer lamination sequence) which includes, as the first layers to be laminated on the pre-polymerized tube, two layers of laminates with unidirectional reinforcement in the direction of the longitudinal axis of the pre-polymerized tube, to ensure optimal integration of the optical fiber inside the main body 2;
- applying a layer of adhesive on the pre-polymerized tube, for instance a structural adhesive film, which extends also partly over the external surface of the terminal inserts, preferably until covering the second section 343b of the first end portion 34 of each terminal insert where the grove 37 (in the form of a ramp, as mentioned above) is located, taking care to leave free access to the protection tube glued at the channel ingress end;
- placing the first layer of the outer lamination sequence on top of the adhesive layer, preferably with unidirectional reinforcement in the direction of the longitudinal axis of the pre-polymerized tube;
- placing the optical fiber 8 by positioning the optical fiber on the first layer and making the free ends of the optical fiber 8 to enter the passage channels 36 of the terminal inserts 31, 32; the positioning of the optical fiber 8 includes positioning sensors S1 and S2 in the desired positions respectively in the main body 2 (for the measurement of deformations) and inside the passage channel 36 in a terminal insert 31, 32 (for the measurement of temperature). In particular, in each terminal insert 31, 32, the optical fiber 8 is glued to the protection tube at the channel ingress end, by using an adequate quantity of adhesive paste, in order to seal the space between the inner wall of the protection tube and the optical fiber 8 to ensure that the excess resin produced during polymerization of the outer tube cannot penetrate into the protection tube;
- applying the second layer of the outer lamination sequence;
- handling the free ends of the optical fiber 8 so as to wrap the length of the fiber that comes out of each terminal insert 31, 32 on the outer wall of the respective fiber protection element 41, 42, which is then inserted into the cavity of the second end portion 35 of the terminal insert 31, 32, to protect the fiber il all the subsequent procedures; and
- completing the outer lamination sequence, possibly carrying out pre-compaction with a vacuum bag to optimize adhesion between the layers.

The outer lamination sequence may for example comprise, as already anticipated above, a layer of adhesive material, eight layers of carbon unidirectional and six layers of carbon fabric. A first group of these layers covers the pre-polymerized tube and extends over the end portion of each terminal insert 31, 32 to compensate the difference of external diameter between the first and second sections 343a, 343b of each terminal insert 31, 32. The remaining layers extend on part of the first section 343a of the end portion of each terminal insert 31, 32. It is therefore evident that in the main body 2 of the sensorized rod resulting from the process described above, the outer tube 22 has a longer length than the inner tube 21, as also schematically shown in Figure 1b.

At the end of step 504, an artifact is obtained which will be referred to as the second half-finished product.

Step 505 comprises carrying out a polymerization of the layers of the second half-finished product. In particular, step 505 comprises a known polymerization process, for instance in autoclave, which involves the use of a vacuum bag and the application of a pressure to the artifact obtained after step 504. It is required avoiding that the pressure leads to the failure of the walls of the tube 2 during the polymerization process. To avoid such risk, it is possible to add an internal vacuum bag, which is connected to the external one to form a unique vacuum bag that makes possible the application of the pressure from both sides of the walls of main body 2, which is sustained. Alternatively, it is possible to use a sacrificial internal mandrel (for instance made of a material soluble in water) to be positioned inside the main body 2 before polymerization.

The procedure for the realization of the vacuum bag and the subsequent polymerization process are known in the art for the production of composites elements by using vacuum bag technology.

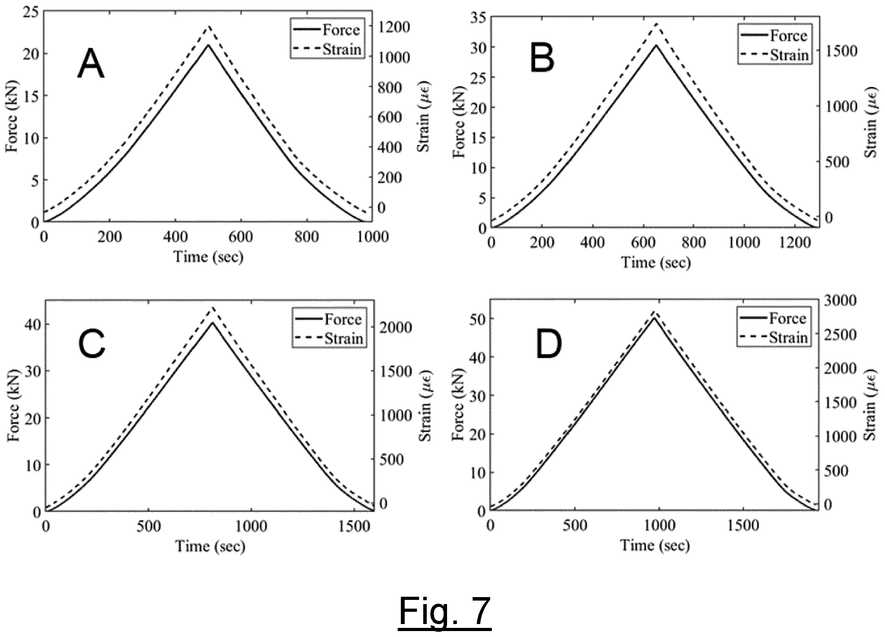

A sensorized rod prototype, which has been made using the procedure described above, has been subjected to a series of tensile tests at different force levels. The curves shown in Figure 7 relate to the measure of the applied force during the test and to the measure acquired by the sensor S1. Figure 7-A, Figure 7-B, Figure 7-C, and Figure 7-D are respectively referred to a loading-unloading cycle with maximum force of 20 kN, 30 kN, 40 kN and 50 kN, Figure 7-B is referred to a loading-unloading cycle with a maximum force of 20 kN, It is shown that the strain acquired by sensor S1 exactly follows the trend of the applied force, during both loading and unloading phases of the test, in a repeatable way. Therefore, such signal constitutes a measure of the force applied to the sensorized rod.

The invention as described above allows providing hybrid structural devices in composite/metallic material equipped with a monitoring system based on optical fibers for the measurement of deformations, loads and temperature in operating conditions. The structure described above allows:
- facilitating the installation of the monitoring system inside the structural device. Indeed, the optical fiber is embedded in the composite material during the lamination, and passes through a channel in the terminal insert, exiting at a position where a connector could be placed;
- protecting the optical fibers during the application of the temperature and pressure cycles necessary to produce the structural device;
- installing fiber optic sensors not mechanically attached to the structural device, in order to obtain temperature measurements which are not affected from mechanical stresses; and also
- making available some cavities, which may be used also to house the connectors necessary to connect the monitoring system to an acquisition system to acquire the data obtainable from the monitoring system installed in the structural device. There is thus no need to design a specific connector slot in the terminal insert.

In particular, the invention is based on the introduction of some advantageous features in terminal inserts, which are often present in structural devices when composite material is used, due to the critical behavior of the composite material in the presence of strong concentrated loads and three-dimensional stress states, which are typical in the areas of connection with other structural parts. The advantageous features of the metal insert according to the embodiments of the present invention that have been presented above allow to manage aspects related to the introduction in the structural device of the monitoring system based on optical fibers. In particular, the terminal insert in the structural device of the present invention is equipped with special channels and cavities inside which the optical fiber of the monitoring system is housed. Such channels and cavities, for example, can be conveniently obtained by applying additive manufacturing processes for metallic elements, with a minimum increase in costs and complexity compared to the production of terminal inserts having only structural functions.

## Claims

1. A structural device (1) comprising a first component (2) of a composite material and a second component (31, 32, 61 ) of a metallic material, said second component (31, 32; 61) being integrated in said first component (2) during a manufacturing of said structural device (1), the structural device being **characterized by** being a rod for a civil engineering structure or a vehicle capable of carrying loads, said first component (2) being a cylindrical main body of the rod and said second component being a terminal insert (31, 32, 61 ) configured to be associated with an end of said main body,
wherein said structural device (1) further comprises a monitoring system comprising an optical fiber (8) with a number of sensors (S1, S2) for sensing data indicative of an operating status of said structural device (1),
wherein said second component (31, 32, 61) is configured to house an end portion of said monitoring system.

2. The structural device (1) according to claim 1, wherein said structural device (1) further comprises a third component (41, 42; 67) for protecting said optical fiber (8) of said end portion of the monitoring system during said manufacturing.

3. The structural device (1) according to claim 2, wherein said third component (41, 42) is a separate component with respect to said first component (2) and said second component (31, 32),
wherein said end portion of the monitoring system comprises an end portion of the optical fiber (8) and said third component (41, 42) is configured to have said end portion of the optical fiber (8) wrapped on it, and
wherein said second component (31, 32) comprises an inner cavity (351) configured to house said third component (41, 42) with said end portion of the optical fiber (8) wrapped on it.

4. The structural device (1) according to claim 2 or 3, wherein said third (41, 42) component is made of a thermoplastic resin.

5. The structural device according to claim 2, wherein said third component (67) is made in a single body with said second component (61),
wherein said end portion of the monitoring system comprises an end portion of the optical fiber and said second component (61) is configured to have said end portion of the optical fiber wrapped on an external surface thereof,
wherein said third component (67) comprises a cover (672) projecting from said external surface to cover said end portion of the optical fiber wrapped on it, and
wherein said structural device comprises a closing element (71) configured to be associated with said third component (67) to close it in a removable way, to hold said end portion of the optical fiber within a closed protection cavity formed between said external surface and said cover (672).

6. The structural device (1) according to any one of the preceding claims, wherein said second component (31, 32; 61) comprises, in its side wall, a passage channel (36; 66) for said optical fiber (8) of the monitoring system.

7. The structural device (1) according to claim 6, wherein said optical fiber (8) comprises a deformation sensor (S1) inscribed therein and a temperature sensor (S2) inscribed therein, wherein said temperature sensor (S2) is loosely installed in said passage channel (36, 66).

8. The structural device (1) according to claim 7, wherein said deformation sensor (S1) and said temperature sensor (S2) are fiber bragg grating sensors.

9. The structural device (1) according to any one of the preceding claims, wherein said second component (31, 32; 61) is made in one of the following metallic materials: aluminum alloy, titanium alloy, steel, nickel-titanium alloy.

10. A manufacturing method of a structural device (1) comprising a first component (2) of a composite material, a second component (31, 32; 61) of a metallic material and a monitoring system comprising an optical fiber (8) with a number of sensors (S1, S2), said structural device (1) being a rod for a civil engineering structure or a vehicle capable of carrying loads, said first component (2) being a cylindrical main body of the rod and said second component being a terminal insert (31, 32; 61) configured to be associated with an end of said main body, said manufacturing method comprising:
a) providing said second component (31, 32; 61) of a metallic material by applying an additive manufacturing technique;
b) performing a first lamination process to provide a first element (21) of said first component (2);
c) associating said second component (31, 32; 61) with said first element of said first component (2) at the end of said first lamination process;
d) performing a second lamination process to provide a second element (22) of said first component (2); and
e) during said second lamination process, putting said optical fiber (8) over a layer of a lamination sequence of said second lamination process, making an end portion of said optical fiber (8) to pass in a passage channel (36; 66) of said second component (31, 32; 61) and applying a further layer of said lamination sequence over said optical fiber (8).

11. The manufacturing method according to claim 10, wherein step a) comprises manufacturing said second component (31, 32; 61) by using a laser metal deposition technology.

12. The manufacturing method according to claim 10 or 11, wherein step a) comprises providing one or more protection tubes for protecting said end portion of said optical fiber (8) inside and outside said passage channel (36; 66) and gluing an external surface of said one or more protection tubes to the second component (31, 32; 61) at a channel ingress end and at a channel egress end to seal the space between said one or more protection tubes and the walls of said passage channel (36; 66).

13. The manufacturing method according to any of claims 10 to 12, wherein step b) comprises obtaining said first element (21) as a pre-polymerized element by applying a lamination sequence comprising layers of carbon unidirectional and a cure cycle in autoclave.

14. The manufacturing method according to claim 13, wherein step d) comprises applying on said pre-polymerized element (21), before said layer of the lamination sequence of said second lamination process, a layer of adhesive extending partly over an external surface of said second component (31, 32; 61).

## Patentansprüche

1. Strukturvorrichtung (1), umfassend eine erste Komponente (2) aus einem Verbundmaterial und eine zweite Komponente (31, 32, 61) aus einem Metallmaterial, wobei die zweite Komponente (31, 32; 61) während einer Herstellung der Strukturvorrichtung (1) in die erste Komponente (2) integriert wird,
wobei die Strukturvorrichtung **dadurch gekennzeichnet ist, dass** sie eine Stange für eine Hoch- und Tiefbaustruktur oder für ein zum Tragen von Lasten fähiges Fahrzeug ist, wobei die erste Komponente (2) ein zylindrischer Hauptkörper der Stange ist und die zweite Komponente ein Klemmeinsatz (31, 32, 61) ist, der dazu konfiguriert ist, mit einem Ende des Hauptkörpers verbunden zu sein,
wobei die Strukturvorrichtung (1) ferner ein Überwachungssystem umfasst, das eine optische Faser (8) mit einer Anzahl von Sensoren (S1, S2) zum Erfassen von Daten umfasst, die anzeigend für einen Betriebsstatus der Strukturvorrichtung (1) sind,
wobei die zweite Komponente (31, 32, 61) dazu konfiguriert ist, einen Endabschnitt des Überwachungssystems aufzunehmen.

2. Strukturvorrichtung (1) nach Anspruch 1, wobei die Strukturvorrichtung (1) ferner eine dritte Komponente (41, 42; 67) zum Schützen der optischen Faser (8) des Endabschnitts des Überwachungssystems während der Herstellung umfasst.

3. Strukturvorrichtung (1) nach Anspruch 2, wobei die dritte Komponente (41, 42) eine getrennte Komponente in Bezug auf die erste Komponente (2) und die zweite Komponente (31, 32) ist,
wobei der Endabschnitt des Überwachungssystems einen Endabschnitt der optischen Faser (8) umfasst und die dritte Komponente (41, 42) dazu konfiguriert ist, dass der Endabschnitt der optischen Faser (8) um sie gewickelt ist, und
wobei die zweite Komponente (31, 32) einen Innenhohlraum (351) umfasst, der dazu konfiguriert ist, die dritte Komponente (41, 42) mit dem um sie gewickelten Endabschnitt der optischen Faser (8) aufzunehmen.

4. Strukturvorrichtung (1) nach Anspruch 2 oder 3, wobei die dritte Komponente (41, 42) aus thermoplastischem Harz gefertigt ist.

5. Strukturvorrichtung nach Anspruch 2, wobei die dritte Komponente (67) in einem einzigen Körper mit der zweiten Komponente (61) gefertigt ist,
wobei der Endabschnitt des Überwachungssystems einen Endabschnitt der optischen Faser umfasst und die zweite Komponente (61) dazu konfiguriert ist, dass der Endabschnitt der optischen Faser um eine Außenfläche davon gewickelt ist,
wobei die dritte Komponente (67) eine Abdeckung (672) umfasst, die von der Außenfläche hervorsteht, um den um sie gewickelten Endabschnitt der optischen Faser abzudecken, und
wobei die Strukturvorrichtung ein Verschlusselement (71) umfasst, das dazu konfiguriert ist, mit der dritten Komponente (67) verbunden zu sein, um sie auf abnehmbare Weise zu verschließen, um den Endabschnitt der optischen Faser im Inneren eines verschlossenen Schutzhohlraums zu halten, der zwischen der Außenfläche und der Abdeckung (672) ausgebildet ist.

6. Strukturvorrichtung (1) nach einem der vorhergehenden Ansprüche, wobei die zweite Komponente (31, 32; 61) in ihrer Seitenwand einen Durchgangskanal (36; 66) für die optische Faser (8) des Überwachungssystems umfasst.

7. Strukturvorrichtung (1) nach Anspruch 6, wobei die optische Faser (8) einen darin eingravierten Verformungssensor (S1) und einen darin eingravierten Temperatursensor (S2) umfasst, wobei der Temperatursensor (S2) lose in dem Durchgangskanal (36, 66) eingebaut ist.

8. Strukturvorrichtung (1) nach Anspruch 7, wobei der Verformungssensor (S1) und der Temperatursensor (S2) Faser-Bragg-Gitter-Sensoren sind.

9. Strukturvorrichtung (1) nach einem der vorhergehenden Ansprüche, wobei die zweite Komponente (31, 32; 61) aus einem der folgenden Metallmaterialien gefertigt ist: Aluminiumlegierung, Titanlegierung, Stahl, Nickel-Titan-Legierung.

10. Herstellungsverfahren einer Strukturvorrichtung (1), umfassend eine erste Komponente (2) aus einem Verbundmaterial, eine zweite Komponente (31, 32; 61) aus einem Metallmaterial und ein Überwachungssystem, das eine optische Faser (8) mit einer Anzahl von Sensoren (S1, S2) umfasst, wobei die Strukturvorrichtung (1) eine Stange für eine Hoch- und Tiefbaustruktur oder für ein zum Tragen von Lasten fähiges Fahrzeug ist, wobei die erste Komponente (2) ein zylindrischer Hauptkörper der Stange ist und die zweite Komponente ein Klemmeinsatz (31, 32; 61) ist, der dazu konfiguriert ist, mit einem Ende des Hauptkörpers verbunden zu sein, das Herstellungsverfahren umfassend:
a) Bereitstellen der zweiten Komponente (31, 32; 61) aus einem Metallmaterial durch Anwenden einer additiven Herstellungstechnik;
b) Durchführen eines ersten Laminierungsvorgangs, um ein erstes Element (21) der ersten Komponente (2) bereitzustellen;
c) Verbinden der zweiten Komponente (31, 32; 61) mit dem ersten Element der ersten Komponente (2) an dem Ende des ersten Laminierungsvorgangs;
d) Durchführen eines zweiten Laminierungsvorgangs, um ein zweites Element (22) der ersten Komponente (2) bereitzustellen; und
e) während dem zweiten Laminierungsvorgang, Platzieren der optischen Faser (8) über einer Schicht einer Laminierungssequenz des zweiten Laminierungsvorgangs, Veranlassen, dass ein Endabschnitt der optischen Faser (8) in einem Durchgangskanal (36; 66) der zweiten Komponente (31, 32; 61) verläuft und Anwenden einer weiteren Schicht der Laminierungssequenz über der optischen Faser (8).

11. Herstellungsverfahren nach Anspruch 10, wobei Schritt a) das Herstellen der zweiten Komponente (31, 32; 61) durch Verwenden einer Lasermaterialablagerungstechnologie umfasst.

12. Herstellungsverfahren nach Anspruch 10 oder 11, wobei Schritt a) das Bereitstellen von einem oder mehreren Schutzschläuchen zum Schützen des Endabschnitts der optischen Faser (8) innerhalb und außerhalb des Durchgangskanals (36; 66) und das Kleben einer Außenfläche des einen oder der mehreren Schutzschläuche an die zweite Komponente (31, 32; 61) an einem Kanaleintrittsende und an einem Kanalaustrittsende umfasst, um den Raum zwischen dem einen oder den mehreren Schutzschläuchen und den Wänden des Durchgangskanals (36; 66) zu versiegeln.

13. Herstellungsverfahren nach einem der Ansprüche 10 bis 12, wobei Schritt (b) das Erhalten des ersten Elements (21) als ein vorpolymerisiertes Element umfasst, durch Anwenden einer Schichten aus Kohlenstoff umfassenden Laminierungssequenz in eine Richtung und eines Aushärtzyklus im Autoklav.

14. Herstellungsverfahren nach Anspruch 13, wobei Schritt d) das Anwenden einer Schicht von Klebstoff, die sich teilweise über eine Außenfläche der zweiten Komponente (31, 32; 61) erstreckt, auf dem vorpolymerisierten Element (21) umfasst, vor der Schicht der Laminierungssequenz des zweiten Laminierungsvorgangs.

## Revendications

1. Dispositif structurel (1) comprenant un premier composant (2) d'un matériau composite et un deuxième composant (31, 32, 61) d'un matériau métallique, ledit deuxième composant (31, 32; 61) étant intégré dans ledit premier composant (2) lors de la fabrication dudit dispositif structurel (1),
le dispositif structurel étant **caractérisé par** être une tige pour une structure de génie civil ou un véhicule capable de transporter des charges, ledit premier composant (2) étant un corps principal cylindrique de la tige et ledit deuxième composant étant un insert terminal (31, 32, 61) configuré pour être associé à une extrémité dudit corps principal,
dans lequel ledit dispositif structurel (1) comprend en outre un système de surveillance comprenant une fibre optique (8) avec un certain nombre de capteurs (S1, S2) pour détecter des données indiquant un état de fonctionnement dudit dispositif structurel (1),
dans lequel ledit deuxième composant (31, 32, 61) est configuré pour loger une partie d'extrémité dudit système de surveillance.

2. Dispositif structurel (1) selon la revendication 1, dans lequel ledit dispositif structurel (1) comprend en outre un troisième composant (41, 42; 67) pour protéger ladite fibre optique (8) de ladite partie d'extrémité du système de surveillance pendant ladite fabrication.

3. Dispositif structurel (1) selon la revendication 2, dans lequel ledit troisième composant (41, 42) est un composant distinct par rapport audit premier composant (2) et audit deuxième composant (31, 32),
dans lequel ladite partie d'extrémité du système de surveillance comprend une partie d'extrémité de la fibre optique (8) et ledit troisième composant (41, 42) est configuré pour avoir ladite partie d'extrémité de la fibre optique (8) enroulée sur celui-ci, et
dans lequel ledit deuxième composant (31, 32) comprend une cavité interne (351) configurée pour loger ledit troisième composant (41, 42) avec ladite partie d'extrémité de la fibre optique (8) enroulée sur celle-ci.

4. Dispositif structurel (1) selon la revendication 2 ou 3, dans lequel ledit troisième composant (41, 42) est fait d'une résine thermoplastique.

5. Dispositif structurel selon la revendication 2, dans lequel ledit troisième composant (67) est fabriqué en un seul corps avec ledit deuxième composant (61),
dans lequel ladite partie d'extrémité du système de surveillance comprend une partie d'extrémité de la fibre optique et ledit deuxième composant (61) est configuré pour avoir ladite partie d'extrémité de la fibre optique enroulée sur une surface externe de celui-ci, et
dans lequel ledit troisième composant (67) comprend un couvercle (672) faisant saillie depuis ladite surface externe pour recouvrir ladite partie d'extrémité de la fibre optique enroulée sur celui-ci, et
dans lequel ledit dispositif structurel comprend un élément de fermeture (71) configuré pour être associé audit troisième composant (67) pour le fermer de manière amovible, pour maintenir ladite partie d'extrémité de la fibre optique à l'intérieur d'une cavité de protection fermée formée entre ladite surface externe et ledit couvercle (672).

6. Dispositif structurel (1) selon l'une quelconque des revendications précédentes, dans lequel ledit deuxième composant (31, 32; 61) comprend, dans sa paroi latérale, un canal de passage (36; 66) pour ladite fibre optique (8) du système de surveillance.

7. Dispositif structurel (1) selon la revendication 6, dans lequel ladite fibre optique (8) comprend un capteur de déformation (S1) inscrit à l'intérieur de celle-ci et un capteur de température (S2) inscrit à l'intérieur de celle-ci, dans lequel ledit capteur de température (S2) est installé lâchement dans ledit canal de passage (36, 66).

8. Dispositif structurel (1) selon la revendication 7, dans lequel ledit capteur de déformation (S1) et ledit capteur de température (S2) sont des capteurs à réseau de Bragg sur fibre.

9. Dispositif structurel (1) selon l'une quelconque des revendications précédentes, dans lequel ledit deuxième composant (31, 32; 61) est fabriqué en l'un des matériaux métalliques suivants : alliage d'aluminium, alliage de titane, acier, alliage nickel-titane.

10. Procédé de fabrication d'un dispositif structurel (1) comprenant un premier composant (2) d'un matériau composite, un deuxième composant (31, 32; 61) d'un matériau métallique et un système de surveillance comprenant une fibre optique (8) avec un certain nombre de capteurs (S1, S2), ledit dispositif structurel (1) étant une tige pour une structure de génie civil ou un véhicule capable de transporter des charges, ledit premier composant (2) étant un corps principal cylindrique de la tige et ledit deuxième composant étant un insert terminal (31, 32; 61) configuré pour être associé à une extrémité dudit corps principal, ledit procédé de fabrication comprenant :
a) la fourniture audit deuxième composant (31, 32; 61) d'un matériau métallique en appliquant une technique de fabrication additive ;
b) la réalisation d'un premier processus de stratification pour fournir un premier élément (21) dudit premier composant (2) ;
c) l'association dudit deuxième composant (31, 32; 61) audit premier élément dudit premier composant (2) à la fin dudit premier processus de stratification ;
d) la réalisation d'un deuxième processus de stratification pour fournir un deuxième élément (22) dudit premier composant (2) ; et
e) pendant ledit deuxième processus de stratification, le placement de ladite fibre optique (8) sur une couche d'une séquence de stratification dudit deuxième processus de stratification, en faisant passer une partie d'extrémité de ladite fibre optique (8) dans un canal de passage (36; 66) dudit deuxième composant (31, 32; 61) et l'application d'une couche supplémentaire de ladite séquence de stratification sur ladite fibre optique (8).

11. Procédé de fabrication selon la revendication 10, dans lequel l'étape a) comprend la fabrication dudit deuxième composant (31, 32; 61) à l'aide d'une technologie de dépôt métallique par laser.

12. Procédé de fabrication selon la revendication 10 ou 11, dans lequel l'étape a) comprend la fourniture d'un ou plusieurs tubes de protection pour protéger ladite partie d'extrémité de ladite fibre optique (8) à l'intérieur et à l'extérieur dudit canal de passage (36 ; 66) et le collage d'une surface externe dudit l'un ou plusieurs tubes de protection au deuxième composant (31, 32; 61) à une extrémité d'entrée de canal et à une extrémité de sortie de canal pour sceller l'espace entre ledit l'un ou plusieurs tubes de protection et les parois dudit canal de passage (36; 66).

13. Procédé de fabrication selon l'une quelconque des revendications 10 à 12, dans lequel l'étape b) comprend l'obtention dudit premier élément (21) en tant qu'élément prépolymérisé par application d'une séquence de stratification comprenant des couches de carbone unidirectionnel et un cycle de durcissement en autoclave.

14. Procédé de fabrication selon la revendication 13, dans lequel l'étape d) comprend l'application sur ledit élément prépolymérisé (21), avant ladite couche de la séquence de stratification dudit deuxième processus de stratification, d'une couche d'adhésif se prolongeant partiellement sur une surface externe dudit deuxième composant (31, 32; 61).
